# EUROPEAN PATENT SPECIFICATION

(11) **EP 1 717 467 B1**
(45) Date of publication and mention of the grant of the patent: **27.10.2010**
(21) Application number: 05709876.6
(22) Date of filing: 08.02.2005
(51) Int. Cl.: F16C 19/52, B60B 27/00, F16C 19/18, G01L 5/00

(54) **BEARING DEVICE FOR WHEEL**
LAGERVORRICHTUNG FÜR RAD
DISPOSITIF DE PALIER POUR UNE ROUE

(30) Priority: 18.02.2004 JP 2004041048
(43) Date of publication of application: 02.11.2006
(73) Proprietor: NTN Corporation, Osaka-shi, Osaka 550-0003 (JP)
(72) Inventor: IWAMOTO, Kenichi, NTN CORPORATION, Iwata-shi, Shizuoka 438-0037 (JP); OZAKI, Takayoshi, NTN CORPORATION, Iwata-shi, Shizuoka 438-0037 (JP); KOIKE, Takashi, NTN CORPORATION, Iwata-shi, Shizuoka 438-0037 (JP)
(74) Representative: Wagner, Kilian
(86) International application number: PCT/JP2005/001824
(87) International publication number: WO 2005/078292

(56) References cited:
- JP-A- 7 332 360
- JP-A- 8 025 106
- JP-A- 2001 200 841
- JP-A- 2002 213 438
- JP-A- 2002 292 503
- JP-A- 2002 292 503
- JP-A- 2003 004 593
- JP-A- 2004 045 370
- JP-A- 2004 045 370

## Description

### FIELD OF THE INVENTION

The present invention relates to a bearing device for a wheel, which is used in an automotive vehicle and is preloaded.

### BACKGROUND ART

The bearing device for the wheel is rendered to be a double row rolling bearing in the form of an angular contact ball bearing or a tapered roller bearing and is applied a preload. As a method of controlling the application of a preload in the standard double row rolling bearing of a kind used in a spindle motor or a disc drive device for an information processing equipment, the method is known in which the preload control is carried out with a revolution torque. (See, for example, the Japanese Laid-open Patent Publication No. 2003-74548 published March 12, 2003.)

However, since the above described preload application control method is a method, in which while a predetermined rotational torque is continuously applied to the bearing, the application of the preload is interrupted when the number of revolution of the bearing attains a target number of revolution, an equipment for the preload control tends to become bulky where it is applied to a relatively large bearing such as, for example, a bearing device for an automobile wheel. Also, in order to eliminate influences on the torque control brought about by bearing seals, the bearing seals have to be assembled after the preload has been applied, resulting in complication of the assembling work. Moreover, since there is no bearing seal during the preload being applied, there is the possibility that dusts and grits may enter in the bearing.

Regarding further relevant prior art, JP 2002 213438 A discloses a bearing device which comprises an outer member having an inner peripheral surface formed with a plurality of rows of rolling surfaces, an inner member formed with rolling surfaces opposed to the rolling surfaces of the outer member, and a plurality of rows of rolling elements interposed between the opposed rolling surfaces, whereby the outer member is provided with a sensor for detecting the amount of preload provided on the bearing.

Further reference is made to JP 2002 292503 A which document, in the context of a machine tool, permits controlling a preload applied to a bearing device, by means of preload sensors. Additional reference is made to JP 2004 045370 A.

Thus, an object of the present invention is to provide a bearing device for a wheel, in which the preload control can easily be executed; in particular, a uniform amount of preload can be applied, with uniform and stable quality.

This problem is solved by means of the bearing device according to claim 1; preferred embodiments of the invention are given in the dependent claims.

The bearing device for the wheel according to claim 1 is a bearing device for a wheel, including an outer member having an inner peripheral surface formed with a plurality of rows of rolling surfaces or raceways, an inner member formed with rolling surfaces opposed to the rolling surfaces of the outer member, and a plurality of rows of rolling elements interposed between the opposed rolling surfaces and is used for rotatably supporting a vehicle wheel relative to a vehicle body, in which either the outer member or the inner member is provided with a sensor for detecting the amount of preload in the bearing.

According to this construction, since the sensor for detecting the amount of preload of the bearing is provided on either the outer member or the inner member, the preload can be applied to the bearing while a signal from the sensor is monitored. For this reason, even though the preload is applied in a condition with a sealing member mounted, variation of the amount of the preload is minimum and the bearing rigidity and the rotational torque of the individual bearing can be kept uniform and the quality is stabilized. Also, since the preload can be applied while the sealing member is incorporated, assemblage of the bearing can be facilitated and ingress of dusts and grits into the bearing is prevented during the application of the preload.

The sensor for detecting the amount of the preload of the bearing may be a piezoelectric element, a strain gauge or a magnetostrictive element. In the case of the piezoelectric element, the strain gauge or the magnetostrictive element, mounting onto the bearing at a low price is possible. Because of this, the use may be dedicated to the preload control during the application of the preload and it may be rendered to be disposable.

In the present invention, the sensor for detecting the amount of preload of the bearing may comprise a thin film printed directly on a member of one of the outer and inner members.

When the sensor referred to above comprises the thin film formed directly on one of the outer and inner members by means of a printing technique, no work of mounting the sensor is required, facilitating assemblage of the bearing and the sensor can be provided at a low price.

In the present invention, the inner member includes a hub axle and an inner race mounted on an outer periphery of the hub axle, in which the inner race is fixed on the hub axle by means of a crimped portion formed by crimping or staking an inboard end of the hub axle and in which the preload of the bearing may be applied by this crimping to form the crimped portion.

In the case of this construction, a crimping work to form the crimped portion concurrently serves as a work of applying the preload. At this time, by controlling a detection signal outputted from the sensor in response to a load acting on the sensor, the amount of preload of the bearing can be precisely set.

In the present invention, the bearing for the wheel is so assembled as to attain a predetermined preload by utilization of the signal from the sensor referred to above.

### BRIEF DESCRIPTION OF THE DRAWINGS

In any event, the present invention will become more clearly understood from the following description of preferred embodiments thereof. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a longitudinal sectional view of a bearing device for a wheel according to a first preferred embodiment of the present invention;
Fig. 2 is a chart showing the waveform of an output voltage of a piezoelectric element provided in the bearing device for the wheel shown in Fig.1 as a sensor;
Fig. 3 is a chart showing the waveform of an output voltage of a strain gauge provided in the bearing device for the wheel shown in Fig.1 as the sensor;
Fig. 4 is a longitudinal sectional view of the bearing device for the wheel according to a second embodiment;
Fig. 5 is a longitudinal sectional view of the bearing device for the wheel according to a third embodiment;
Fig. 6 is a longitudinal sectional view of the bearing device for the wheel according to a fourth embodiment which is a further preferred embodiment of the present invention;
Fig. 7 is a longitudinal sectional view of the bearing device for the wheel according to a fifth embodiment; and
Fig. 8 is a longitudinal sectional view of the bearing device for the wheel according to a sixth embodiment.

### BEST MODE FOR CARRYING OUT THE INVENTION

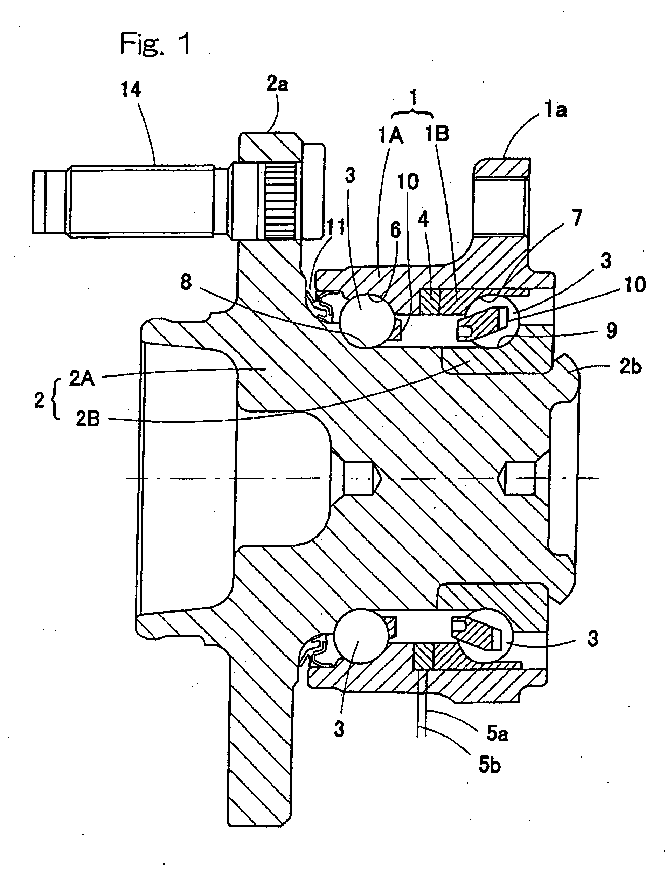

A first preferred embodiment of the present invention will be described with particular reference to Figs. 1 to 3. This embodiment is directed to a third generation, inner race rotating type and is applied to a bearing device for the support of a driven wheel.

As shown in Fig. 1, this bearing device for the wheel includes an outer member 1 having an inner periphery formed with double rows of rolling surfaces 6 and 7, an inner member 2 having rolling surfaces 8 and 9 opposed to the rolling surfaces 6 and 7, respectively, and double rows of rolling elements 3 interposed between the rolling surfaces 6 and 8 and between the rolling surfaces 7 and 9, respectively. The outer member 1 is fitted at one end to a knuckle (not shown) of a vehicle body through a vehicle body installation flange 1a.

The inner member 2 has a wheel mounting flange 2a and the wheel (not shown) is fitted to this wheel mounting flange 2a through a plurality of bolts 14. This bearing device for the wheel is rendered to be a double row angular contact ball bearing and the rolling surfaces 6 to 9 represent an arcuate sectional shape with their contact angles held in back-to-back relation with each other. The rolling elements 3 are in the form of a ball and are retained by a retainer 10 employed for each row. At a location outside of the row of the rolling elements 3 on the outboard side, an annular space delimited between the outer member 1 and the inner member 2 are sealed by a sealing member 11. It is to be noted that the term "outboard" is intended to speak of an outer side of the widthwise direction of the vehicle body while this bearing device for the wheel is mounted on the automotive vehicle and the term "inboard" is intended to speak of an inner or a center side of the widthwise direction of the vehicle body.

The outer member 1 serves as a stationary member and includes an outer member body 1A having the vehicle body installation flange 1a and an outer race 1B mounted on an inner periphery of an inboard end of the outer member body 1A. The rolling surfaces 6 and 7 of each row are formed in the outer member body 1A and the outer race 1B, respectively. A ring-shaped sensor 4 for detecting the amount of preload of the bearing acting in an axial direction is provided between the outer member body 1A and the outer race 1B. The sensor 4 is in the form of a piezoelectric element, and lead-out lines 5a and 5b are connected with electrode terminals thereof. The sensor 4 in the form of the piezoelectric element is of a type, in which when a load is applied from outside thereto, a voltage is generated and the voltage corresponding to the load can be obtained between the lead-out lines 5a and 5b as a detected preload amount signal. It is to be noted that for the sensor 4 referred to above, a strain gauge may be employed as an alternative to the piezoelectric element.

The inner member 2 includes a hub axle 2A having the wheel mounting flange 2a integral therewith and an inner race 2B and, by crimping an inboard end of the hub axle 2A to form a crimped portion 2b, the both are rendered to be combined together integrally. Of the double rows of the rolling surfaces 8 and 9, the rolling surface 8 is formed in the hub axle 2A and the other rolling surface 9 is formed in the inner race 2B. Since the hub axle 2A is for the driven wheel, it is of a shape having no center hole.

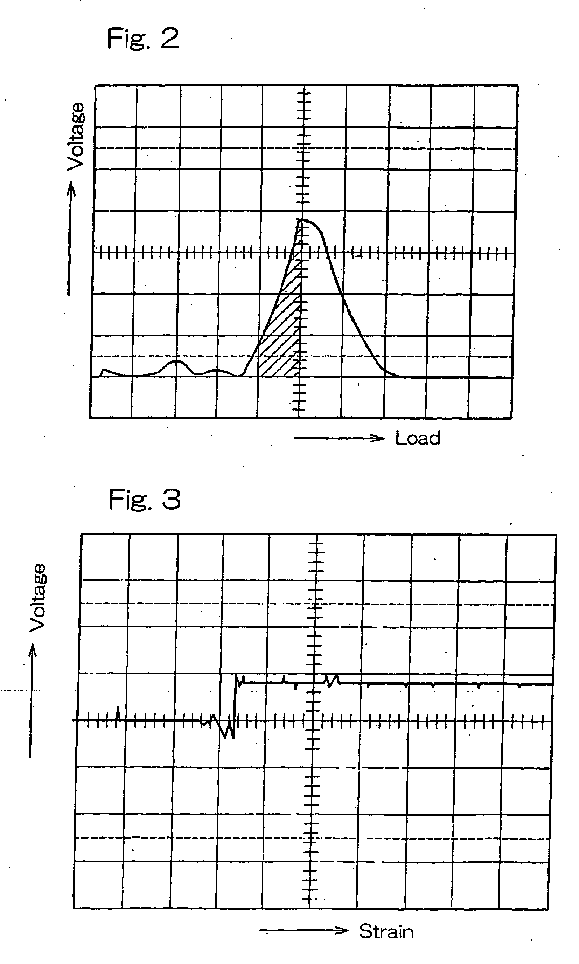

The operation of the above described construction will be described. The sensor 4 in the form of the piezoelectric element is sandwiched between the outer member body 1A and the outer race 1B and, as the axially acting load acts on the outer race 1B, the load acts on the sensor 4, too. The waveform of the voltage generated in the sensor 4 in the form of the piezoelectric element at this time is shown in Fig. 2. Referring to Fig. 2, a portion of the chart on a left side of the center, at which the peak of the waveform appears, represents a positive component of a change of the preloaded load, while another portion of the chart on a right side of the center represents a discharge of the charge accumulated on the sensor 4 in the form of the piezoelectric element. Accordingly, the value obtained by integrating a hatched area shown on the left side of the peak of the voltage waveform corresponds to the amount of preload of the bearing. Accordingly, by controlling the integrated amount, a uniform amount of initial preload can be applied precisely. Also, even when the amount of preload is detected while the sealing member 11 has already been incorporated, the presence of the sealing member 11 does not adversely affect the detection precision and, therefore, not only can the assemblage be simplified, but also ingress of the dusts and grits into the bearing is prevented during the application of the preload.

Fig. 3 illustrates the voltage waveform obtained when a strain gauge is used for the sensor 4 and the load acts on such strain gauge. Fig. 3 makes it clear that as the load acting on the sensor 4 in the form of the strain gauge increase, the voltage generated by the sensor 4 change stepwise. In view of this, in such case, by controlling a potential difference of the stepwise changing voltage generated by the sensor 4, the amount of preload of the bearing can be precisely set.

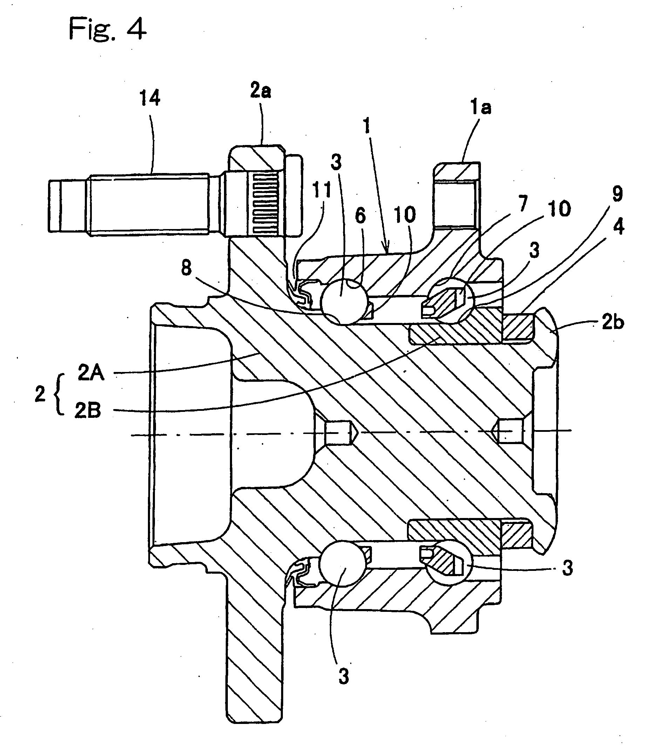

Fig. 4 illustrates a second embodiment. This embodiment is such that in the first embodiment shown in Fig. 1, the outer member 1 is rendered to be an independent member and the sensor 4 is provided in the inner member 2. The inner member 2 is, as is the case with that in the first embodiment, made up of the hub axle 2A, and the inner race 2B. The ring-shaped sensor 4 in the form of, for example, the piezoelectric element, is disposed between the crimped portion 2b, formed in the inboard end of the hub axle 2A, and an end face of the inner race 2B opposed to the crimped portion 2b. By crimping to form the crimped portion 2b, the inner race 2B and the sensor 4 are axially positioned and fixed to the hub axle 2A with the sensor 4 sandwiched between the inner race 2B and the crimped portion 2b. Other structural features are similar to those in the first embodiment.

In the case of this construction, since the crimping work to apply the preload to the bearing is accompanied by change in output voltage of the sensor 4 in the form of the piezoelectric element, the amount of preload of the bearing can be precisely set by controlling this output voltage. Also, since the crimping work to form the crimped portion 2b concurrently serves as the work to apply the preload, no extra work other than the assemblage of the bearing is required solely for the application of preload, resulting in simplification of the work. Even in the case where the strain gauge is used for the sensor 4, the amount of preload can be precisely set in a manner similar to that described above.

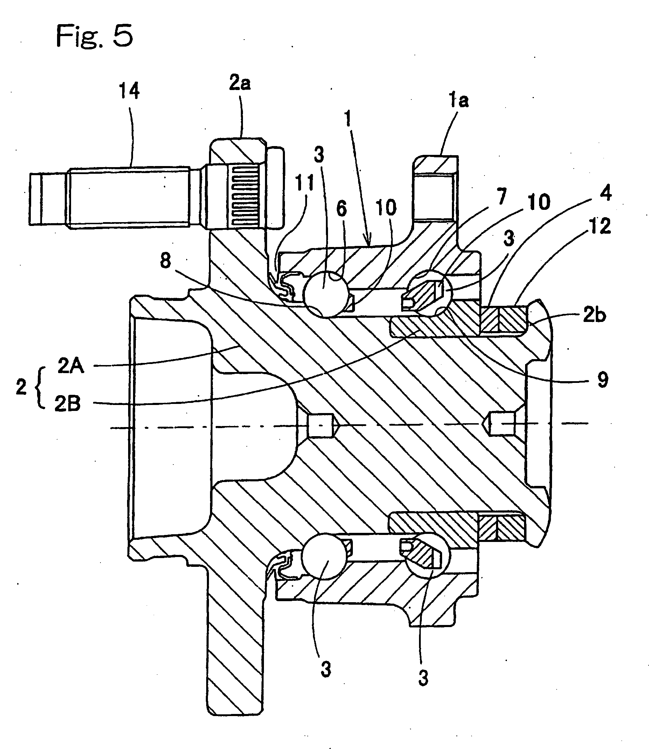

Fig. 5 illustrates a third embodiment. This embodiment is such that in the second embodiment shown in Fig. 4, a spacer 12 is interposed between the sensor 4 and the crimped portion 2b of the hub axle 2A. In other words, the inner race 2B, the sensor 4, the spacer 12 and the crimped portion 2b are sequentially arranged in this order from the inner race 2B to the crimped portion 2b. Other structural features are similar to those in the second embodiment shown in Fig. 4.

Thus, intervention of the spacer 12 is effective to allow a uniform load to be applied to the sensor 4 in the form of the piezoelectric element during the application of preload, facilitating a further accurate preload control.

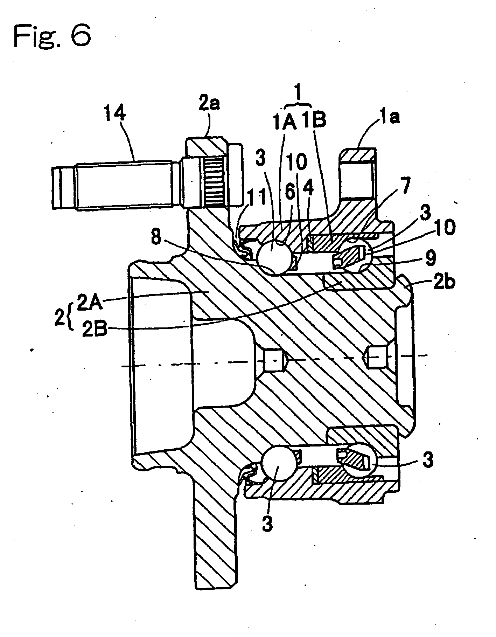

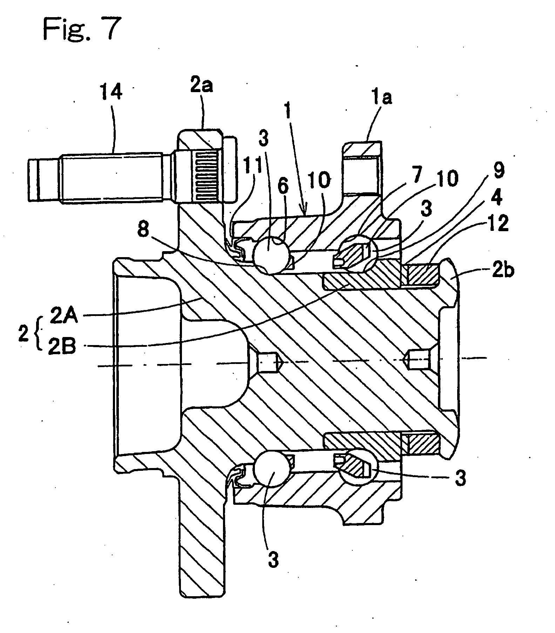

Figs. 6 and 7 illustrates fourth and fifth embodiments. The fourth embodiment shown in Fig. 6 is such that in the first embodiment shown in Fig. 1, in place of the use of the sensor 4 and the outer member 1, which are separate from each other, there is shown an example, in which the sensor 4 is comprised of a thin film printed directly on the outer race 1B or the outer member body 1A by means of a printing technique. This thin film is, for example, a strain gauge having printed wirings. The fifth embodiment shown in Fig. 7 is such that in the third embodiment shown in Fig. 5, in place of the use of the separate sensor 4, there is shown an example, in which the sensor 4 is comprised of a thin film printed directly on the inner race 2B or the spacer 12 by means of a printing technique.

If the sensor 4 is comprised of the thin film formed directly on the outer member 1 or the inner member 2 by means of the printing technique such as in those embodiments, no work of fitting the sensor 4 is required, assemblage of the bearing can be facilitated and the sensor can be provided at a low price.

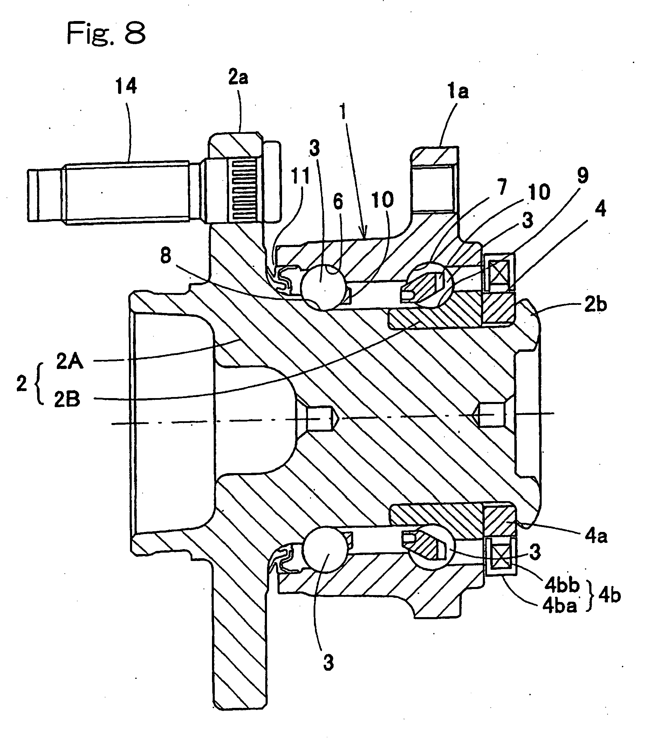

Although in any one of the foregoing embodiments the examples have been described, in which as the sensor 4 for detecting the amount of preload the piezoelectric element or the strain gauge is employed, any other element may be employed, provided that it can detect the load. By way of example, a magnetostrictive element may be employed as the sensor 4. This example is shown in the sixth embodiment of Fig. 8. In this example, the sensor 4 is in the form of a ring-shaped detector 4b made up of a ring-shaped magnetostrictive material 4a, a yoke 4ba and a coil 4bb, with the magnetostrictive material 4a interposed between the inner race 2B and the crimped portion 2b. The detector 4b is fitted to one end of the inner race 2B. If during the crimping, the magnetostrictive material 4a, of which magnetic permeability changes with the preload, is taken as a target and detection is then made with the detector 4b having the coil 4bb referred to above, the preload can be controlled.

Also, in any one of the foregoing embodiments, the shape of the sensor 4 may not be limited to a plate shape or a thin film shape, but may be, for example, a pipe-like shape. Also, the sensor 4 may not be limited to the ring shape, but may be of a type locally provided at, for example, a plurality of locations in a circumferential direction.

Also, although any one of the foregoing embodiments has been described as applied to the bearing device of the third generation type, the present invention can be equally applied regardless of the particular generation type. By way of example, in the embodiment shown in Fig. 1, it may be rendered to be a bearing device for a wheel of a second generation type, in which a plurality of inner races (not shown) are provided on the hub axle 2A.

## Claims

1. A bearing device for a wheel used for rotatably supporting a vehicle wheel relative to a vehicle body, which comprises an outer member (1) having an inner peripheral surface formed with a plurality of rows of rolling surfaces (6, 7), an inner member (2) formed with rolling surfaces (8, 9) opposed to the rolling surfaces of the outer member, and a plurality of rows of rolling elements (3) interposed between the opposed rolling surfaces, wherein:
either the outer member or the inner member is provided with a sensor for detecting the amount of pre-load provided on the bearing, wherein the inner member includes a hub axle (2A) and an inner race (2B) mounted on an outer periphery of the hub axle, and the inner race is fixed on the hub axle by means of a crimped portion (2b) formed by crimping an inboard end of the hub axle and wherein the preload of the bearing may be applied by this crimping to form the crimped portion.

2. The bearing device for the wheel as claimed in Claim 1, wherein the sensor for detecting the amount of the axial load of the bearing is a piezoelectric element.

3. The bearing device for the wheel as claimed in claim 1, wherein the sensor for detecting the amount of the preload of the bearing is a strain gauge.

4. The bearing device for the wheel as claimed in claim 1, wherein the sensor for detecting the amount of the preload of the bearing is magnetostriktive element.

5. The bearing device for the wheel as claimed in claim 1, wherein the sensor for detecting the amount of the preload of the bearing comprises a thin film printed directly on a member of one of the outer and inner members.

6. The bearing device for the wheel as claimed in claim 1, which is so assembled as to attain a predetermined preload by utilization of the signal from the sensor.

## Patentansprüche

1. Lagervorrichtung für ein Rad, die verwendet wird, um ein Fahrzeugrad im Verhältnis zum Fahrzeugkörper drehbar zu lagern, wobei die Lagervorrichtung ein äußeres Element (1) mit einer inneren umlaufenden Oberfläche, die mit mehreren Reihen von Rollflächen (6, 7) ausgebildet ist, ein inneres Element (2), das mit Rollflächen (8, 9) ausgebildet ist, die den Rollflächen des äußeren Elements gegenüberliegen, und mehrere Reihen von Rollelementen (3) umfasst, die zwischen den gegenüberliegenden Oberflächen angeordnet sind, wobei:
entweder das äußere Element oder das innere Element mit einem Sensor ausgestattet ist, um die Höhe der Vorlast zu erkennen, die am Lager anliegt, wobei das innere Element eine Nabenachse (2A) und einen inneren Laufring (2B) aufweist, der an einen äußeren Umfang der Nabenachse montiert ist, der innere Laufring mit Hilfe eines gebördelten Abschnitts (2b), der durch Bördeln eines fahrzeuginnenseitigen Endes der Nabenachse ausgebildet ist, an der Nabenachse befestigt ist und wobei die Vorlast des Lagers durch das Bördeln zum Ausbilden des gebördelten Abschnitts angelegt sein kann.

2. Lagervorrichtung für ein Rad nach Anspruch 1, wobei der Sensor zum Erkennen der Höhe der Axiallast des Lagers ein piezoelektrisches Element ist.

3. Lagervorrichtung für ein Rad nach Anspruch 1, wobei der Sensor zum Erkennen der Höhe der Vorlast des Lagers ein Dehnungsmesser ist.

4. Lagervorrichtung für ein Rad nach Anspruch 1, wobei der Sensor zum Erkennen der Höhe der Vorlast des Lagers ein magnetostriktives Element ist.

5. Lagervorrichtung für ein Rad nach Anspruch 1, wobei der Sensor zum Erkennen der Höhe der Vorlast des Lagers einen dünnen Film umfasst, der direkt auf das innere und/oder das äußere Element aufgedruckt ist.

6. Lagervorrichtung für ein Rad nach Anspruch 1, die derart zusammengefügt ist, dass durch Verwendung des Signals vom Sensor eine festgelegte Vorlast erreicht wird.

## Revendications

1. Dispositif de palier pour une roue, utilisé pour supporter à rotation une roue de véhicule par rapport à une caisse de véhicule, comprenant un organe extérieur (1) ayant une surface périphérique intérieure, formée d'une pluralité de rangées de surface de roulement (6, 7), un organe intérieur (2), formé avec des surfaces de roulement (8, 9) opposées aux surfaces de roulement de l'organe extérieur, et une pluralité de rangées d'éléments de roulement (3), interposés entre les surfaces de roulement opposées, dans lequel :
soit l'organe extérieur, soit l'organe intérieur, est muni d'un capteur pour détecter la valeur de la précharge appliquée sur le palier, dans lequel l'organe intérieur comprend un axe de moyeu (2A) et une piste intérieure (2B) montée sur une périphérie extérieure de l'axe de moyeu, et la piste intérieure est fixée sur l'axe de moyeu au moyen d'une partie sertie (2b), formée par sertissage d'une extrémité intérieure de l'axe de moyeu, et dans lequel la précharge du palier peut être appliquée par ce sertissage, de manière à former la partie sertie.

2. Dispositif de palier pour la roue selon la revendication 1, dans lequel le capteur servant à détecter la valeur de la charge axiale du palier est un élément piézoélectrique.

3. Dispositif de palier pour la roue selon la revendication 1, dans lequel le capteur servant à détecter la valeur de la précharge du palier est une jauge de contrainte.

4. Dispositif de palier pour la roue selon la revendication 1, dans lequel le capteur servant à détecter la valeur de la précharge du palier est un élément magnétostrictif.

5. Dispositif de palier pour la roue selon la revendication 1, dans lequel le capteur servant à détecter la valeur de la précharge du palier comprend une couche mince, imprimée directement sur un organe parmi l'un des organes extérieur et intérieur.

6. Dispositif de palier pour la roue selon la revendication 1, assemblé de manière à obtenir une précharge prédéterminée, par utilisation du signal provenant du capteur.
